# EUROPÄISCHE PATENTANMELDUNG

(11) **EP 4 686 557 A1**
(43) Veröffentlichungstag der Anmeldung: **04.02.2026**
(21) Anmeldenummer: 25192920.4
(22) Anmeldetag: 30.07.2025
(51) Int. Cl.: B30B 9/12, B30B 9/14, B01D 29/64, B01D 29/35, C02F 11/125

(54) **FÖRDERSCHNECKE FÜR EINEN FLÜSSIGKEITSABSCHEIDER, VERFAHREN ZUM HERSTELLEN EINER FÖRDERSCHNECKE UND FLÜSSIGKEITSABSCHEIDER**

(30) Priorität: 31.07.2024 DE 102024121852
(71) Anmelder: Fliegl Agro-Center GmbH, 84556 Kastl (DE)
(72) Erfinder: Fliegl sen., Josef, 84556 Kastl (DE)
(74) Vertreter: Nußbaum, Christopher

(57) **Zusammenfassung**

Die Erfindung betrifft eine Förderschnecke (12) für einen Flüssigkeitsabscheider (10), der zur Entwässerung einer Faserstoffe enthaltenden Suspension ausgelegt ist, umfassend eine Antriebswelle (16); eine wendelförmig um die Antriebswelle (16) verlaufende Schneckenwendel (18), die an der Antriebswelle (16) befestigt ist; einen wendelförmigen Streifen (24), der so an einem radial äußeren Bereich einer Wendelflanke (22) der Schneckenwendel (18) angeordnet ist, dass zwischen einander zugewandten Oberflächen des wendelförmigen Streifens (24) und der Wendelflanke (22) ein Spalt (28) ausgebildet ist, sodass im Betrieb der Förderschnecke (12) sich die Faserstoffe der Suspension in diesem Spalt (28) ansammeln und eine Abstreifeinrichtung bilden, welche bei bestimmungsgemäßer Anordnung der Förderschnecke (12) im Flüssigkeitsabscheider (10) dazu ausgelegt sind, einen die Förderschnecke (12) umgebenden zylindrischen Sieb (14) des Flüssigkeitsabscheiders (10) abzustreifen. Zudem betrifft die Erfindung ein Verfahren zum Herstellen der Förderschnecke (12) und einen Flüssigkeitsabscheider (10).

## Beschreibung

Die Erfindung betrifft eine Förderschnecke für einen Flüssigkeitsabscheider, ein Verfahren zum Herstellen einer derartigen Förderschnecke sowie einen Flüssigkeitsabscheider mit einer derartigen Förderschnecke.

Flüssigkeitsabscheider zur Entwässerung einer Faserstoffe enthaltenden Suspension sind an sich bekannt. Diese können beispielsweise eine Förderschnecke aufweisen, die von einem zylinderförmigen Sieb umgeben ist. Die Förderschnecke wird in Rotation versetzt und diese fördert dann die Suspension in axialer und radialer Richtung der Förderschnecke, wobei ein flüssiger Anteil der Suspension in radialer Richtung durch das Sieb gepresst und die festen Bestandteile der Suspension innerhalb des Siebs verbleiben und in axialer Richtung beispielsweise zu einem Auswurf befördert werden.

Zwar können damit bei Gärsubstraten aus einer Biogasanlage, Flüssigmist oder sonstigen Schlämmen zunächst gute Abscheidungsraten erzielt werden, jedoch ist die Standzeit dadurch begrenzt, dass sich die Ausnehmungen des Siebs mit aus dem Substrat eingeschwemmten Fasern zusetzen, so dass mit der Betriebsdauer zunehmend weniger Flüssigkeit abgeschieden werden kann. Der Betrieb des Flüssigkeitsabscheiders muss dann für Ausbau und Reinigung des Siebs unterbrochen werden.

Es ist die Aufgabe der Erfindung, die Standzeit eines Flüssigkeitsabscheiders auf besonders einfache Weise zu erhöhen.

Die Aufgabe wird durch die Gegenstände der unabhängigen Ansprüche gelöst. Weitere mögliche Ausgestaltungen der Erfindung sind in den Unteransprüchen, der Beschreibung und der Zeichnung angegeben. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Die erfindungsgemäße Förderschnecke für einen Flüssigkeitsabscheider, der zur Entwässerung einer Faserstoffe enthaltenden Suspension ausgelegt ist, umfasst eine Antriebswelle und eine wendelförmig um die Antriebswelle verlaufende Schneckenwendel, die an der Antriebswelle befestigt ist, insbesondere unmittelbar an der Antriebswelle befestigt ist. Des Weiteren umfasst die Förderschnecke einen wendelförmigen Streifen, der so an einem radial äußeren Bereich einer Wendelflanke der Schneckenwendel angeordnet ist, dass zwischen einander zugewandten Oberflächen des wendelförmigen Streifens und der Wendelflanke ein Spalt ausgebildet ist, sodass im Betrieb der Förderschnecke sich die Faserstoffe der Suspension in diesem Spalt ansammeln und eine Abstreifeinrichtung bilden, welche bei bestimmungsgemäßer Anordnung der Förderschnecke im Flüssigkeitsabscheider dazu ausgelegt sind, einen die Förderschnecke umgebenden zylindrischen Sieb des Flüssigkeitsabscheiders abzustreifen. Der Spalt ist insbesondere nach radial außen offen und nach radial innen geschlossen ausgebildet, sodass die Faserstoffe sich einerseits gut im Spalt festsetzen und andererseits in radialer Richtung nach außen, also in Richtung des Siebs, über den Spalt hinausragen können. Der Spalt hat seine Haupterstreckungsrichtung in Umfangsrichtung der Förderschnecke, ist also umlaufend bzw. helixförmig ausgebildet, ebenso wie der wendelförmige Streifen.

Der wendelförmige Streifen und die Schneckenwendel weisen insbesondere die gleiche Steigung auf, verlaufen also parallel zueinander. Der wendelförmige Streifen ist insbesondere schmaler in radialer Richtung als die Schneckenwendel, kann dabei aber genauso lang wie die Schneckenwendel sein. Würde man den wendelförmigen Streifen und die Schneckenwendel abwickeln, sodass diese gerade und nicht mehr wendelförmig sind, wären sie also zumindest im Wesentlichen gleich lang. Der wendelförmige Streifen kann in radialer Richtung beispielsweise zwei- bis sechsmal schmaler sein als die Schneckenwendel, sodass für den wendelförmigen Streifen ein recht geringer Materialeinsatz erforderlich ist.

Die Antriebswelle kann beispielsweise von einem Motor angetrieben und damit in Rotation versetzt werden. Die Schneckenwendel dreht sich dann entsprechend mit, da diese an der Antriebswelle befestigt ist, beispielsweise mit dieser verschweißt ist. Der wendelförmige Streifen dreht sich ebenfalls mit, da dieser mit der Schneckenwendel verbunden ist. Die dem wendelförmigen Streifen zugewandte Wendelflanke ist so weit von dem Streifen beabstandet, dass besagter Spalt ausgebildet ist. In diesem Spalt, der eine Art Reservoir für die Fasern ist, können sich die Faserstoffe der Suspension ansammeln und einen Faserkuchen bilden. Dieser Faserkuchen kann in einen Radialspalt zwischen der Schneckenwendel und dem zylindrischen Sieb hineinwachsen bzw. hineinragen. Der Faserkuchen bzw. die sich im Spalt angesammelten und komprimierten Faserstoffe bilden während des Betriebs des Flüssigkeitsabscheiders also besagte Abstreifeinrichtung aus.

Während also die Förderschnecke weiter angetrieben und somit in Rotation versetzt wird, streifen die in radialer Richtung aus dem Spalt in den Radialspalt ragenden Fasern wie eine Art Bürste an dem zylindrischen Sieb entlang und befreien dessen Öffnungen von eventuell darin festgesetzten Fasern. Der zwischen der Förderschnecke und dem zylindrischen Sieb vorhandene Radialspalt wird so dimensioniert, dass ein Verklemmen der Faseransammlungen im Radialpalt verhindert wird, der Radialpalt aber so eng gewählt wird, dass ein stabiler Faserkuchen über eine Außenkante der Schneckenwendel hinauswachsen kann, der das zylindrische Sieb berührt und somit zuverlässig abstreifen kann. Mit zunehmender Betriebsdauer der Förderschnecke verbessert sich also die Abstreifwirkung der im Spalt festgesetzten Faserstoffe. Das Sieb wird also immer besser gereinigt und nicht, wie eingangs erwähnt, immer schlechterc. Die Faserstoffe bilden während des Betriebs eine immer besser funktionierende Abstreifeinrichtung aus, welche den Sieb fortlaufend bürstet und dessen Öffnungen von Verstopfungen mit Feststoffen befreien kann.

Eine mögliche Ausgestaltung der Erfindung sieht vor, dass der wendelförmige Streifen mehrere Entwässerungsschlitze aufweist, welche in Querrichtung des wendelförmigen Streifens als Durchgangsöffnungen ausgebildet sind, durch welche der flüssige Anteil der Suspension austreten kann. Die Querrichtung des wendelförmigen Streifens entspricht der Längsrichtung der Förderschnecke, also der Förderrichtung der Förderschnecke. Dadurch wird die Ansammlung und Verfestigung der Fasern innerhalb des Spalts, also zwischen dem wendelförmigen Streifen und der Wendelflanke der Schneckenwendel, begünstigt. Während der Festsetzung der Fasern im Spalt werden die Fasern durch nachrückende Fasern weiter verdichtet und die Flüssigkeit der Suspension kann durch die Entwässerungsschlitze aus dem Spalt gelangen. Zudem sorgen die Entwässerungsschlitze dafür, dass die Fasern sich in den Entwässerungsschlitzen verankern können. Die Fasern verzahnen sich dadurch mit dem wendelförmigen Streifen, v.a. im Bereich der Entwässerungsschlitze. Der aus den Fasern gebildete Faserkuchen, bzw. die aus den Fasern gebildete Bürste, wird dadurch besonders stabil. Infolgedessen können die Fasern das zylindrische Sieb besonders effektiv abbürsten und somit Fasern aus Öffnungen des Siebs entfernen.

Eine weitere mögliche Ausgestaltung der Erfindung sieht vor, dass die Entwässerungsschlitze in radialer Richtung nur einseitig offen sind. Ein radiales Ende der Entwässerungsschlitze liegt also noch im Inneren des wendelförmigen Streifens, erstreckt sich also nicht bis zu einer Außenkante des wendelförmigen Streifens. Das andere radiale Ende der Entwässerungsschlitze hingegen erstreckt bis zu einer Außenkante des wendelförmigen Streifens. Dadurch können sich die Fasern besonders gut in den Entwässerungsschlitzen verankern, da sie in die nur einseitig in radialer Richtung offen ausgebildeten Entwässerungsschlitze eingepresst werden.

In weiterer möglicher Ausgestaltung der Erfindung ist es vorgesehen, dass zumindest bei einem Teil der Entwässerungsschlitze der einseitig offene Teil an einem in radialer Richtung inneren Bereich des Streifens ausgebildet ist, der mit der Schneckenwendel verbunden ist. Die in den Spalt gelangte Suspension wird also nach radial innen über diese Entwässerungsschlitze ausgepresst, wobei der flüssige Anteil der Suspension nach radial innen und nach axial außen - also weg von der Schneckenwendel - aus dem Spalt herausgefördert wird. Die Fasern bleiben in dem Spalt zwischen Schneckenwendel und wendelförmigem Streifen und bilden die Abstreifeinrichtung aus, die aus dem Faserkuchen gebildet wird, der durch die Fasern aufgebaut ist.

Gemäß einer weiteren möglichen Ausgestaltung der Erfindung ist es vorgesehen, dass der wendelförmige Streifen an derjenigen Wendelflanke angeordnet ist, die bezogen auf die Förderrichtung der Förderschnecke eine Rückseite der Schneckenwendel bildet. Der wendelförmige Streifen ist also nicht an der Druckseite der Schneckenwendel angeordnet, der beim Rotieren der Schneckenwendel das Substrat in axialer Richtung fördert. Stattdessen ist der wendelförmige Streifen an der von der Druckseite abgewandten Rückseite der Schneckenwendel angeordnet. Dies begünstigt das Entwässern des in den Spalt zwischen der Wendelflanke und dem Streifen gelangten Substrats. Denn auf dieser Seite der Schneckenwendel wird die Suspension v.a. in axialer Richtung weniger stark durch die Entwässerungsschlitze in den Spalt hineingedrückt als es auf der Druckseite der Fall wäre.

Eine weitere mögliche Ausgestaltung der Erfindung sieht vor, dass die Schneckenwendel und der wendelförmige Streifen sich in radialer Richtung gleich weit erstrecken. Der zwischen der Schneckenwendel und dem wendelförmigen Streifen ausgebildete Spalt wird also in axialer Richtung gleichermaßen weit von der Schneckenwendel und dem wendelförmigen Streifen begrenzt. Jeweilige Außenkanten der Schneckenwendel und des wendelförmigen Streifens ragen also gleich weiter in radialer Richtung nach außen. Das begünstigt das Ausbilden und Festsetzen der Fasern in dem Spalt, sodass diese eine besonders gute Bürst- und somit Reinigungswirkung beim zylindrischen Sieb erzielen können.

In weiterer möglicher Ausgestaltung der Erfindung ist es vorgesehen, dass der wendelförmige Streifen in radialer Richtung einen äußeren Abschnitt und in radialer Richtung einen inneren Abschnitt aufweist, wobei der äußere Abschnitt parallel zur Schneckenwendel verläuft und der innere Abschnitt angewinkelt zur Schneckenwendel ausgerichtet ist. Mit anderen Worten ist Spalt im radial äußeren Abschnitt rechteckig und im radial inneren Abschnitt trichterförmig zulaufend ausgebildet. Das begünstigt das Festsetzen der Fasern in dem Spalt und das Auspressen der Flüssigkeit aus dem Spalt, sodass die Fasern besonders gut im Spalt verdichtet werden. Dadurch ergibt sich ein besonders stabiler Faserkuchen mit guter Bürst- und somit Reinigungswirkung am Sieb.

Bei dem erfindungsgemäßen Verfahren zum Herstellen der erfindungsgemäßen Förderschnecke oder einer möglichen Ausgestaltung der Förderschnecke, wird ein gerader Streifen mit dreieckigen Durchgangsöffnungen bereitgestellt, aus dem der wendelförmige Streifen hergestellt wird, indem der gerade Streifen sukzessive wendelförmig umgeformt und an die Schneckenwendel angelegt sowie an dieser befestigt wird. Der wendelförmige Streifen wird also aus einem geraden Halbzeug hergestellt, der dreieckige Durchgangsöffnungen an den Stellen aufweist, an denen später beim wendelförmigen Streifen die Entwässerungsschlitze ausgebildet sein sollen. Beim Umbiegen des geraden Halbzeugs werden aus den dreieckigen Durchgangsöffnungen zumindest im Wesentlichen gerade und schlitzförmige Durchgangsöffnungen. Der wendelförmige Streifen kann sukzessive an die betreffende Wendelflanke der Schneckenwendig angelegt bzw. an diese herangebogen und dann mit dieser verschweißt werden.

Die dreieckigen Durchgangsöffnungen am Halbzeug können beispielsweise gestanzt werden. Durch das Vorhandensein der dreieckigen Durchgangsöffnungen kann das Halbzeug besonders einfach in die wendelförmige, also helixartige Form, gebogen werden. Aus dem geraden Halbzeug wird also eine Spirale in Form des wendelförmigen Streifens gebogen, welche die gleiche Steigung aufweist wie die Schneckenwendel.

Es ergibt sich eine besonders einfache Herstellbarkeit der Förderschnecke, v.a. des wendelförmigen Streifens und dessen Befestigung an der betreffenden Wendelflanke der Schneckenwendel. Der wendelförmige Streifen kann v.a. einstückig bzw. einteilig sein, indem das Halbzeug entsprechend lang gewählt und einfach spiralförmig umgebogen wird. Dadurch können weitere Herstellschritte entfallen, um den wendelförmigen Streifen zusammenzusetzen und aneinander zu befestigen.

Der erfindungsgemäße Flüssigkeitsabscheider, der zur Entwässerung einer Faserstoffe enthaltenden Suspension ausgelegt ist, umfasst die erfindungsgemäße Förderschnecke oder eine mögliche Ausgestaltung der erfindungsgemäßen Förderschnecke, wobei diese von einem zylindrischen Sieb umgeben ist. Der Flüssigkeitsabscheider kann noch einen Antrieb aufweisen, der dazu ausgelegt ist, die Förderschnecke in Rotation zu versetzen. Des Weiteren kann der Flüssigkeitsabscheider einen Zufluss für die Suspension aufweisen, sodass diese in einen Zwischenraum zwischen der Förderschnecke und dem Sieb gelangen kann. Ferner kann der Flüssigkeitsabscheider einen Abfluss aufweisen, aus dem die aus der Suspension abgeschiedene Flüssigkeit herausfließen kann. Des Weiteren kann der Flüssigkeitsabscheider einen Auswurf aufweisen, zu dem die Förderschnecke die Festbestandteile der Suspension befördern kann. Der Auswurf kann an einem axialen Endbereich der Förderschnecke anschließend angeordnet sein.

Eine mögliche Ausgestaltung der Erfindung sieht vor, dass in radialer Richtung zwischen einer Außenkante der Schneckenwendel und dem Sieb sowie zwischen einer Außenkante des wendelförmigen Streifens und dem Sieb ein Radialspalt ist, der in radialer Richtung breiter als 0,2mm ist, insbesondere breiter als 1mm ist. Beispielsweise kann dieser Radialspalt 1,5mm betragen. Der Radialspalt ist so gewählt, dass keine zu großen oder übermäßig genaue Fertigungstoleranzen eingehalten werden müssen. Zudem ist der Radialspalt so dimensioniert, dass sich in dem Radialspalt und in den Öffnungen des Siebs die Faserstoffe der Suspension nicht verklemmen. Des Weiteren ist der Radialspalt so dimensioniert, dass sich ein stabiler Faserkuchen bilden kann und über die Außenkante der Schneckenwendel hinauswachsen kann, sodass dieser das zylindrische Sieb berührt. Dadurch dichtet der Faserkuchen, der als die besagte Abstreifeinrichtung funktioniert, zudem auch den Radialspalt so ab, dass von der Druckseite der Schneckenwendel möglichst wenig Suspension über den Radialspalt übertreten kann. Bei einer Förderschnecke, die sehr präzise, also mit geringer Fertigungstoleranz bzw. sehr geringem oder quasi keinem Radialspalt, in das Sieb, also den Siebkorb, eingepasst wird, kann der Siebkorb mit der Förderschnecke in Berührung kommen. Es kann also zu einem Metall-Metall Kontakt kommen, infolgedessen ein nicht unerheblicher Abrieb bzw. Verschleiß auftreten kann. Der Faserkuchen hingegen führt das Sieb "schwimmend" ohne direkten Kontakt Metall auf Metall, da der Faserkuchen eine Art Lagerung bildet. Der Abrieb des Metalls wird dadurch verringert oder gar verhindert. Der Faserkuchen reibt hingegen ab, bildet sich aber regelmäßig neu. Der Faserkuchen erfüllt somit drei Aufgaben: Erstens fungiert er als Dichtung, zweitens als Gleitlager und drittens reinigt er das Sieb.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Seitenschnittansicht eines Flüssigkeitsabscheiders, der eine Förderschnecke aufweist, die eine Antriebswelle und eine wendelförmig darum verlaufende sowie daran befestigte Schneckenwendel umfasst, welche von einem zylinderförmigen Sieb des Flüssigkeitsabscheiders umgeben ist, wobei in einem radial äußeren Bereich an der Schneckenwendel ein wendelförmiger Streifen angeordnet ist;
- Fig. 2: eine schematische Perspektivansicht der Förderschnecke ohne das zylinderförmige Sieb;
- Fig. 3: eine Detailansicht des Flüssigkeitsabscheiders, in welcher der radial äußere Bereich der Schneckenwendel dargestellt ist, in dem der wendelförmige Streifen sich befindet, wobei ein zwischen der Förderschnecke und dem zylindrischen Sieb vorhandener Radialspalt zu erkennen ist;
- Fig. 4: ein Perspektivansicht eines geraden Streifens mit dreieckigen Durchgangsöffnungen, aus dem der wendelförmige Streifen hergestellt wird.

Gleiche oder funktionsgleiche Elemente sind in den Figuren mit den gleichen Bezugszeichen versehen.

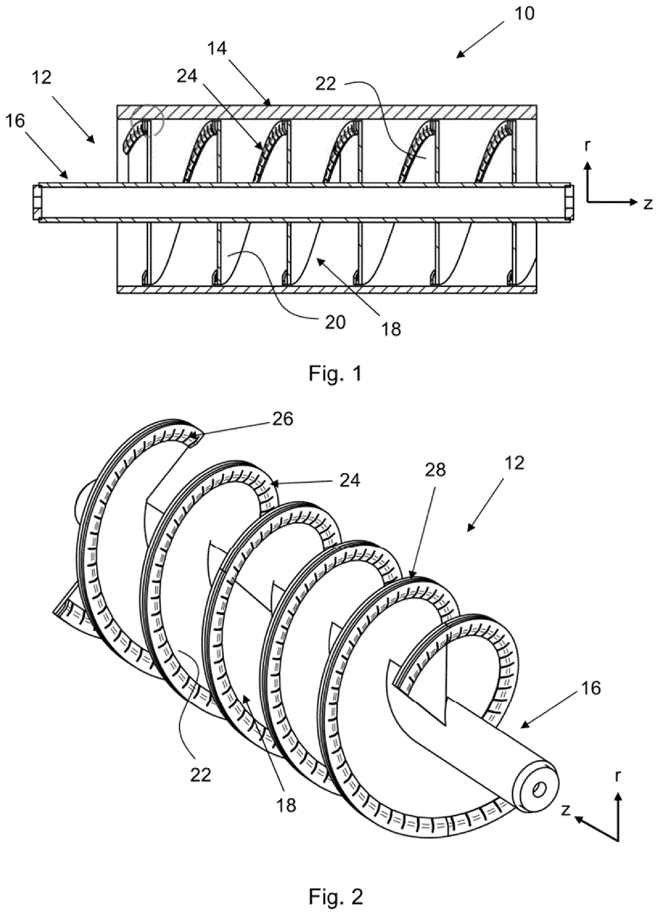

Ein Flüssigkeitsabscheider 10, der zur Entwässerung einer Faserstoffe enthaltenden Suspension ausgelegt ist, ist in einer schematischen Seitenschnittansicht in Fig. 1 gezeigt. Bei der Suspension kann es sich zum Beispiel um Gärsubstrate einer Biogasanlage, Flüssigmist oder sonstige Schlämme handeln. Der Flüssigkeitsabscheider 10 umfasst eine Förderschnecke 12 und ein diese in radialer Richtung r umgebendes zylinderförmiges Sieb 14. Gemäß der vorliegenden Darstellung fördert die Förderschnecke das Substrat von links nach recht, wobei ein Flüssiganteil des Substrats durch das Sieb 14 in radialer Richtung gedrückt wird. Festanteile des Substrats, vor allem darin enthaltene Faserstoffe, werden weitestgehend von dem Sieb 14 zurückgehalten, passieren dessen Löcher also nicht in radialer Richtung r nach außen. Die Festanteile werden gemäß der vorliegenden Darstellung in axialer Richtung z von links nach rechts in Richtung eines hier nicht näher dargestellten Auswurfs befördert.

Die Förderschnecke 12 umfasst eine Antriebswelle 16 sowie eine wendelförmig bzw. helixförmig um diese verlaufende Schneckenwendel 18, die an der Antriebswelle 16 befestigt ist. Die Schneckenwendel 18 kann z.B. an der Antriebswelle 16 angeschweißt sein. Der Flüssigkeitsabscheider 10 kann einen hier nicht näher dargestellten Antrieb aufweisen, der die Antriebswelle 16 in Rotation versetzen kann, infolgedessen die Schneckenwendel 18 angetrieben, also ebenso in Rotation versetzt wird. Die Schneckenwendel 18 hat eine Wendelflanke 20, die als Druckseite fungiert und eine gegenüberliegend davon angeordnete Wendelflanke 22. Die Wendelflanke 20 übt Druck auf das die Faserstoffe enthaltende Substrat aus und fördert die Festanteile gemäß der vorliegenden Darstellung von links nach rechts und zudem die Flüssiganteile des Substrats in radialer Richtung r durch das Sieb 14 hindurch. Bezogen auf die Förderrichtung der Förderschnecke 12 bildet die Wendelflanke 22 also eine Art Rückseite der Schneckenwendel 18, wo im Betrieb ein geringer Druck als an der Wendelflanke 20 herrscht.

An dieser Wendelflanke 22 ist an deren radial äußeren Bereich 24 ein wendelförmiger Streifen 26 angeordnet, der sich helixförmig um die Antriebswelle 16 windet, und zwar mit der gleichen Steigung wie die Schneckenwendel 18.

In Fig. 2 ist Förderschnecke 12 ohne das Sieb 14 in einer schematischen Perspektivansicht gezeigt. Der wendelförmige Streifen 24 weist mehrere Entwässerungsschlitze 26 auf, die in Querrichtung des Streifens 24, also im Wesentlichen in axialer Richtung z der Förderschnecke 12, als Durchgangsöffnungen ausgebildet sind. Durch diese Entwässerungsschlitze 26 kann der flüssige Anteil der Suspension strömen.

Der wendelförmige Streifen 24 ist so an dem radial äußeren Bereich der Wendelflanke 22 angeordnet, dass zwischen einander zugewandten Oberflächen des wendelförmigen Streifens 24 und der Wendelflanke 22 ein Spalt 28 ausgebildet ist. Die Haupterstreckungsrichtung des Spalts 28 verläuft in radialer Richtung r. Im Betrieb der Förderschnecke 12 sammeln sich die Faserstoffe der Suspension in diesem Spalt 28 und bilden eine Art Faserkuchen aus, der als Abstreifeinrichtung fungiert. Die Abstreifeinrichtung, die aus den Fasern gebildet wird, kann das Sieb 14 abstreifen und mit Fasern zugesetzte Löcher des Siebs von den Fasern befreien.

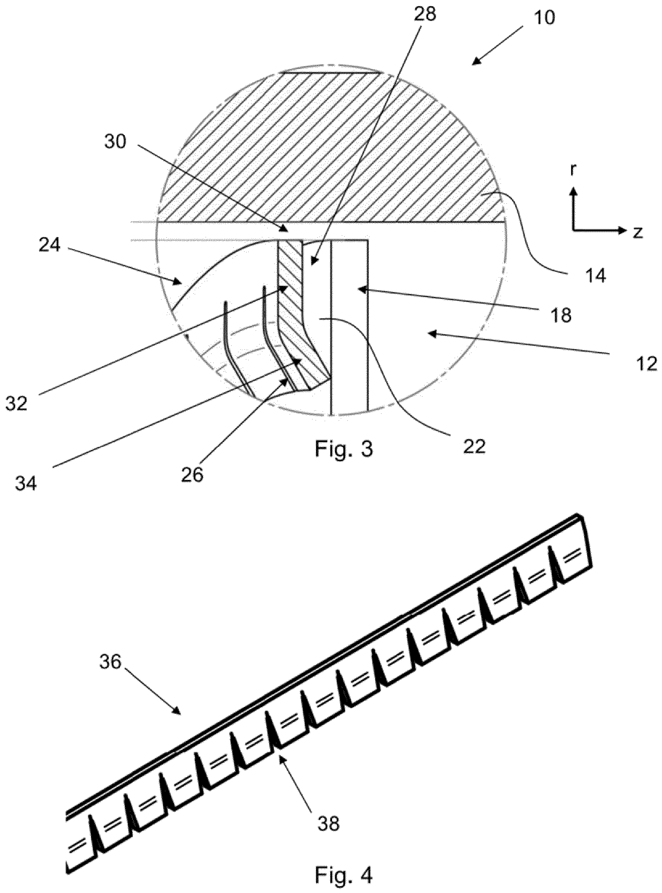

In Fig. 3 ist eine Detailansicht des Flüssigkeitsabscheiders 10 gezeigt, in welcher der radial äußere Bereich der Schneckenwendel 18 dargestellt ist, in dem der wendelförmige Streifen 24 sich befindet, wobei ein zwischen der Förderschnecke 12 und dem zylindrischen Sieb 14 vorhandener Radialspalt 30 zu erkennen ist. Hier sieht man, dass die Schneckenwendel 18 und der wendelförmige Streifen 24 sich in radialer Richtung r gleich weit erstrecken, also in radialer Richtung r bündig sind. Der Radialspalt 30 ist dadurch an einer Außenkante des wendelförmigen Streifens 24 und an einer Außenkante der Schneckenwendel 18 gleich breit.

Zudem erkennt man in dieser Detailansicht gut den Spalt 28 zwischen dem wendelförmigen Streifen 24 und der Wendelflanke 22. Der Radialspalt 30 kann beispielsweise 1,5 mm breit sein, und zwar bezogen auf die radiale Richtung r. Der Spalt 28 setzt sich im Betrieb des Flüssigkeitsabscheiders 10 mit den Faserstoffen der Suspension zu, wobei der flüssige Anteil der Suspension aus den Entwässerungsschlitzen 26 aus dem Spalt 28 fließen kann. Das begünstigt die Ausbildung des besagten Faserkuchens aus den Faserstoffen, welche dann die Abtreifeinrichtung bilden. Die Fasern ragen nach ausreichender Ausbildung des Faserkuchens in radialer Richtung in den Radialspalt 30 hinein und können so beim Rotieren der Schneckenwendel 18 das Sieb 14 und dessen hier nicht dargestellte Löcher bzw. Schlitze abstreifen und so u.a. von Fasern befreien.

Wie man hier gut erkennen kann, sind die Entwässerungsschlitze 26 in radialer Richtung nur einseitig offen. Sie erstrecken sich ca. ab dem oberen Drittel des wendelförmigen Streifens 24 bis zu dessen radial unteren Ende. Im hier gezeigten Fall ist der einseitig offene Teil der Entwässerungsschlitze 26 an einem in radialer Richtung r inneren Bereich des Streifens 24 ausgebildet ist, der mit der Schneckenwendel 18, konkret mit der Wendelflanke 22, verbunden ist.

Der wendelförmige Streifen 24 weist einen in radialer Richtung r äußeren Abschnitt 32 und einen in radialer Richtung r inneren Abschnitt 34 auf. Der äußere Abschnitt 32 ist parallel zur Wendelflanke 22 der Schneckenwendel 18 ausgerichtet, wobei der innere Abschnitt 34 angewinkelt zur Wendelflanke 22 der Schneckenwendel 18 ausgerichtet ist. Der Spalt 28 verjüngt sich also Bereich des inneren Abschnitts 34. Dadurch verkeilen sich die Fasern der Suspension besonders zuverlässig im Spalt 28. Die Entwässerungsschlitze 28 begünstigen zudem zusätzlich das Verkeilen bzw. Festsetzen der Faserstoffe im Spalt 28. In Umfangsrichtung werden die Fasern durch die Entwässerungsschlitze 28 zusätzlich fixiert.

In Fig. 4 ist ein gerader Streifen 36 mit dreieckigen Durchgangsöffnungen 38 gezeigt. Der gerade Streifen 36 dient als Halbzeug für den wendelförmigen Streifen 24. Beim Herstellen der Förderschnecke 12 wird der gerade Streifen 36 mit den dreieckigen Durchgangsöffnungen 38 bereitgestellt und daraus der wendelförmige Streifen 24 hergestellt, indem der gerade Streifen 36 sukzessive wendelförmig umgeformt und an die Schneckenwendel 18 angelegt sowie an dessen Wendelflanke 22 befestigt, z.B. angeschweißt, wird. Der Streifen 36 wird also Stück für Stück helixförmig umgebogen und an die Wendelflanke 22 angelegt und daran fixiert. Man wickelt den geraden Streifen 36 also um die Schneckenwendel 18 und legt diesen an die Wendelflanke 22 an und befestigt diesen an der Wendelflanke 22. Der wendelförmige Streifen 24 kann auf diese Art ganz einfach einteilig bzw. einstückig hergestellt werden. Dies wird durch die dreieckigen Durchgangsöffnungen 38 erleichtert, welche nach dem Umformen die geraden Entwässerungsschlitze 26 bilden.

Der gerade Streifen 36 kann z.B. als eine Art Endlosmaterial aus einem Stahlwerkstoff hergestellt werden, wobei die dreieckigen Durchgangsöffnungen 38 beispielsweise herausgestanzt werden können. Das Material des geraden Streifens 36 und der Schneckenwendel 18 können so aufeinander abgestimmt sein, dass diese besonders gut miteinander verschweißt werden können. Der gerade Streifen 36 kann entgegen der vorliegenden Darstellung auch auf der anderen Seite als Durchgangsöffnungen ausgebildete Schlitze aufweisen, welche dann im fertigen Zustand des wendelförmigen Streifens 24 weitere Entwässerungsschlitze bilden, wobei diese dann z.B. dreieckig würden, aufgrund des Umformvorgangs des geraden Streifens 36.

Der Spalt 28 der Förderschnecke 12 kann also besonders einfach hergestellt werden, indem der als Halbzeug dienende gerade Streifen 36 in der beschriebenen Weise umgebogen und an die Wendelflanke 22 angelegt sowie an dieser befestigt wird. Dabei entsteht besonders wenig Verschnitt. Der Flüssigkeitsabscheider 10 weist aufgrund der Ausgestaltung des wendelförmigen Streifens 24 eine besonders hohe Standzeit auf, da der Spalt 28 sich im Betrieb mit den Faserstoffen befüllt, die dann in den Radialspalt 30 ragen und dafür sorgen, dass das Sieb 14 für den flüssigen Anteil der Suspension durchlässig bleibt und keine Feststoffe der Suspension das Sieb 14 verstopfen. Je länger der Flüssigkeitsabscheider betrieben wird, desto besser verkeilen sich die Faserstoffe in dem Spalt 28 und ragen in den Radialspalt 30 hinein und bilden somit besagte Abstreifeinrichtung in Form des Faserkuchens, der aus den Faserstoffen automatisch aufgebaut wird. Zudem ist ein geringer Materialaufwand erforderlich, da lediglich der relativ schmale wendelförmige Streifen 24 hergestellt werden muss, um den als Reservoir für die Faserstoffe dienenden Spalt 28 zu realisieren. Das kann die rotierenden Massen geringhalten, sodass die Antriebsleistung für die Förderschnecke vergleichsweise gering ausfallen kann. Mittels der erfindungsgmäßen Lösung kann somit die Standzeit des Flüssigkeitsabscheiders 10 auf besonders einfache Weise erhöht werden.

### BEZUGSZEICHENLISTE

- 10: Flüssigkeitsabscheider
- 12: Förderschnecke
- 14: Sieb
- 16: Antriebswelle
- 18: Schneckenwendel
- 20: Wendelflanke
- 22: Wendelflanke, an der der wendelförmige Streifen angebracht ist
- 24: wendelförmiger Streifen
- 26: Entwässerungsschlitze im wendelförmigen Streifen
- 28: Spalt zwischen einander zugewandten Oberflächen des wendelförmigen Streifens und der Wendelflanke
- 30: Radialspalt
- 32: äußerer Abschnitt des wendelförmigen Streifens
- 34: innerer Abschnitt des wendelförmigen Streifens
- 36: gerader Streifen
- 38: dreieckige Durchgangsöffnungen
- r: radiale Richtung
- z: axiale Richtung

## Patentansprüche

1. Förderschnecke (12) für einen Flüssigkeitsabscheider (10), der zur Entwässerung einer Faserstoffe enthaltenden Suspension ausgelegt ist, umfassend
- eine Antriebswelle (16);
- eine wendelförmig um die Antriebswelle (16) verlaufende Schneckenwendel (18), die an der Antriebswelle (16) befestigt ist;
- einen wendelförmigen Streifen (24), der so an einem radial äußeren Bereich einer Wendelflanke (22) der Schneckenwendel (18) angeordnet ist, dass zwischen einander zugewandten Oberflächen des wendelförmigen Streifens (24) und der Wendelflanke (22) ein Spalt (28) ausgebildet ist, sodass im Betrieb der Förderschnecke (12) sich die Faserstoffe der Suspension in diesem Spalt (28) ansammeln und eine Abstreifeinrichtung bilden, welche bei bestimmungsgemäßer Anordnung der Förderschnecke (12) im Flüssigkeitsabscheider (10) dazu ausgelegt sind, einen die Förderschnecke (12) umgebenden zylindrischen Sieb (14) des Flüssigkeitsabscheiders (10) abzustreifen.

2. Förderschnecke (12) nach Anspruch 1, wobei der wendelförmige Streifen (24) mehrere Entwässerungsschlitze (26) aufweist, welche in Querrichtung des wendelförmigen Streifens (24) als Durchgangsöffnungen ausgebildet sind, durch welche der flüssige Anteil der Suspension austreten kann.

3. Förderschnecke (12) nach Anspruch 2, wobei die Entwässerungsschlitze (26) in radialer Richtung (r) nur einseitig offen sind.

4. Förderschnecke (12) nach Anspruch 3, wobei zumindest bei einem Teil der Entwässerungsschlitze (26) der einseitig offene Teil an einem in radialer Richtung inneren Bereich des wendelförmigen Streifens (24) ausgebildet ist, der mit der Schneckenwendel (18) verbunden ist.

5. Förderschnecke (12) nach einem der vorhergehenden Ansprüche, wobei der wendelförmige Streifen (24) an derjenigen Wendelflanke (22) angeordnet ist, die bezogen auf die Förderrichtung der Förderschnecke (12) eine Rückseite der Schneckenwendel (18) bildet.

6. Förderschnecke (12) nach einem der vorhergehenden Ansprüche, wobei die Schneckenwendel (18) und der Streifen sich in radialer Richtung gleich weit erstrecken.

7. Förderschnecke (12) nach einem der vorhergehenden Ansprüche, wobei der wendelförmige Streifen (24) an die Schneckenwendel (18) angeschweißt ist.

8. Förderschnecke (12) nach einem der vorhergehenden Ansprüche, wobei der wendelförmige Streifen (24) einen in radialer Richtung (r) äußeren Abschnitt (32) und einen in radialer Richtung (r) inneren Abschnitt (34) aufweist, wobei der äußere Abschnitt (32) parallel zur Schneckenwendel (18) verläuft und der innere Abschnitt (34) angewinkelt zur Schneckenwendel (18) ausgerichtet ist.

9. Verfahren zum Herstellen einer Förderschnecke (12) nach einem der vorhergehenden Ansprüche, bei dem ein gerader Streifen (36) mit dreieckigen Durchgangsöffnungen (38) bereitgestellt wird, aus dem der wendelförmige Streifen (24) hergestellt wird, indem der gerade Streifen (36) sukzessive wendelförmig umgeformt und an die Schneckenwendel (18) angelegt sowie an dieser befestigt wird.

10. Flüssigkeitsabscheider (10), der zur Entwässerung einer Faserstoffe enthaltenden Suspension ausgelegt ist, umfassend eine Förderschnecke (12) nach einem der vorhergehenden Ansprüche, die von einem zylindrischen Sieb (14) umgeben ist.

11. Flüssigkeitsabscheider (10) nach Anspruch 10, wobei in radialer Richtung (r) zwischen einer Außenkante der Schneckenwendel (18) und dem Sieb (14) sowie zwischen einer Außenkante des wendelförmigen Streifens (24) und dem Sieb (14) ein Radialspalt (30) ist, der in radialer Richtung (r) breiter als 0,2mm ist, insbesondere breiter als 1mm ist.
